# FASCICULE DE BREVET EUROPEEN

(11) **EP 1 179 441 B1**
(45) Date de publication et mention de la délivrance du brevet: **08.02.2006**
(21) Numéro de dépôt: 01118245.8
(22) Date de dépôt: 30.07.2001
(51) Int. Cl.: B60C 9/30

(54) **Pneumatique a armature dissymétrique de sommet et méthode de montage sur un véhicule**
Luftreifen mit asymmetrischer Gürtelstruktur und Verfahren zum Aufziehen eines Reifens auf einem Fahrzeug
Tyre with asymmetric belt structure and method of mounting said tyre on a vehicle

(30) Priorité: 10.08.2000 FR 0010543
(43) Date de publication de la demande: 13.02.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Pirotte, Pascal, 63000 Clermont-Ferrand (FR)
(74) Mandataire: Diernaz, Christian

(56) Documents cités:
- EP-A- 0 820 884
- FR-A- 2 386 424
- US-A- 3 254 693
- US-A- 3 435 874
- US-A- 3 515 197
- US-A- 3 789 898
- US-A- 3 834 439

## Description

L'invention concerne les pneumatiques à carcasse radiale et sommet renforcé sous la bande de roulement au moyen de nappes superposées de fils ou câbles constituant, dans l'exposé qui suit, l'armature de sommet. Elle concerne également une méthode de montage d'un train de pneumatiques sur un véhicule routier.

Un pneumatique pour véhicule de tourisme comprend en règle générale une armature de carcasse radiale ancrée dans deux bourrelets et surmontée radialement par une armature de sommet elle même surmontée radialement par une bande de roulement destinée à venir en contact avec la chaussée pendant le roulage. L'armature de sommet comporte au moins deux nappes, dites de travail, chaque nappe étant composée d'une pluralité de fils ou câbles sensiblement parallèles les uns aux autres dans une même nappe, les fils ou câbles d'une nappe étant croisés avec les fils ou nappes de la /des nappe(s) adjacente(s).

Pour améliorer les caractéristiques générales de comportement en roulage d'un véhicule équipé de pneumatiques, il est connu d'employer des pneumatiques présentant des dissymétries de structure.

Le document FR 1.342.822, pour résoudre un problème d'usure sur véhicule roulant sur une trajectoire à rayons de courbure relativement faibles, enseigne de former une armature de sommet dissymétrique en prévoyant que la rigidité transversale de la bande de roulement décroît d'un bord à l'autre et en ce que la partie la moins rigide soit tournée vers l'extérieur du véhicule lorsque ledit pneumatique est monté sur ledit véhicule. Pour obtenir cette dissymétrie, il est proposé, parmi les exemples décrit, de former une armature de sommet à une nappe s'étendant sur toute la largeur de la bande de roulement et une seconde nappe sur une partie seulement de ladite largeur de manière à conférer à ladite bande une rigidité transversale plus importante sur un côté que sur l'autre.

La présence de dissymétrie de rigidité dans un pneumatique, bien qu'intéressante sur le plan de la performance comportement en roulage sur véhicule, n'est pas sans présenter un certain nombre d'inconvénients et en particulier celui d'une mise en dérive lorsque ledit véhicule roule en ligne droite (c'est-à-dire une répartition d'efforts sur la bande de roulement sensiblement équivalente à ce qui se produit en virage). Il s'ensuit des sollicitations de contact pénalisantes d'un point de vue usure de la bande de roulement du pneumatique; les forces exercées par la chaussée sur les pneumatiques du véhicule provoque en outre un tirage latéral du véhicule, c'est-à-dire que celui-ci s'écarte progressivement de sa trajectoire au cours d'un roulage en ligne droite.

Pour traiter ce problème, le document FR 1.444.271 propose un moyen pour atténuer les effets d'une structure dissymétrique en roulage en ligne droite en superposant à ladite structure une deuxième dissymétrie afin de contrebalancer les effets de la première dissymétrie tout en conservant les bonnes performances en comportement en roulage en virage obtenues par exemple grâce à la présence de la première dissymétrie. Les exemples cités conduisent soit à l'adjonction d'un élément de renfort supplémentaire (nappe de carcasse se prolongeant sous l'armature de sommet) soit à une surépaisseur de la bande de roulement localisée sur une partie seulement de ladite bande.

L'objectif de l'invention est de proposer une structure de pneumatique dissymétrique performante en roulage en virage et en ligne droite qui réduit sensiblement le tirage latéral d'un véhicule équipé avec ce type de pneumatique et par là évite l'apparition des usures irrégulières liées par exemple à une mise en dérive au cours d'un roulage en ligne droite. Le déposant a trouvé que par le choix de valeurs particulières d'un certain nombre de paramètres on pouvait obtenir une amélioration sensible des performances tout en conservant une certaine dissymétrie de la structure du pneumatique sans alourdir ledit pneumatique.

L'objectif est atteint avec un pneumatique présentant un sens de montage préférentiel sur un véhicule routier et comprenant deux bourrelets, un sommet et deux flancs assurant la liaison entre les bourrelets et le sommet, ce pneumatique ayant une armature de carcasse s'étendant d'un bourrelet à l'autre et, radialement à l'extérieur, une armature de sommet, de largeur Ls, formée par un empilement d'au moins deux nappes de sommet, chacune de ces nappes de sommet étant de largeur supérieure ou égale à Ls et comportant une pluralité de fils ou câbles disposés parallèlement selon sensiblement une même direction, les câbles étant croisés d'une nappe à la suivante.

Ce pneumatique comporte en outre une nappe de rigidification méridienne disposée radialement entre l'armature de carcasse et l'armature de sommet et comprenant une pluralité de fils ou câbles sensiblement parallèles les uns aux autres et faisant avec la direction circonférentielle un angle moyen compris entre 50° et 90° ; cette nappe de largeur Lr mesurée entre une première extrémité et une seconde extrémité, a ses deux extrémités situées d'un même côté par rapport au plan équatorial du pneumatique.

Ce pneumatique est caractérisé en ce qu'il comprend des moyens de repérage pour indiquer le côté du pneumatique sur lequel est située la nappe de rigidification méridienne, ces moyens de repérage servant à positionner ladite nappe du côté intérieur d'un véhicule lorsque ce pneumatique est monté sur ledit véhicule routier.

La largeur Ls de l'armature sommet est prise comme la plus petite des largeurs des nappes de sommet; elle correspond à la largeur efficace de l'armature, c'est-à-dire la largeur sur laquelle existe un couplage mécanique entre les nappes de sommet.

Si l'état de la technique connu divulgue des pneumatiques ayant des sommets comprenant des nappes dites de triangulation et disposées de manière symétrique par rapport au plan équatorial desdits pneumatiques, l'invention propose une solution nouvelle et non évidente consistant dans l'association de la présence d'une seule nappe de rigidification méridienne avec l'indication de la nécessaire position de cette nappe par rapport à un véhicule, une fois le pneumatique monté sur ledit véhicule qui permet d'atteindre de bonnes performances en roulage en ligne droite et en virage sans avoir d'effets négatifs en usure et en tirage latéral.

US-A- 3 254 693 décrit un pneumatique dont la structure de renforcement de sommet comprend au moins une nappe ayant une discontinuité et traite le problème selon lequel il a été constaté que ce type de pneumatique fonctionne à la manière de deux pneumatiques. Ce document montre une structure comprenant deux nappes de rigidification méridiennes, une nappe de chaque côté du plan équatorial et ne décrit pas une quelconque disposition dissymétrique.

Divers moyens de repérage peuvent être employés (comme ceux employés dans le documena US-A- 3 435 874 décrivant l'usage de moyens de repérage sur un pneumatique présentant des forces de conicité), notamment un marquage sur l'un des flancs du pneumatique repérant le côté où est située la nappe de rigidification méridienne, un marquage spécifique sur la surface externe ou interne du pneumatique indiquant le côté du pneumatique devant être placé à l'extérieur ou à l'intérieur du véhicule sachant que la nappe de rigidification méridienne est située côté intérieur.

Avec le pneumatique selon l'invention, les caractéristiques suivantes peuvent être également mises en oeuvre seules ou en combinaison :
- la largeur Lr de la nappe de rigidification méridienne est comprise entre 15 et 45 % de Ls;
- la première extrémité de cette nappe de rigidification méridienne est située à une distance D1 du plan équatorial du pneumatique comprise entre 35 % et 50 % de Ls, la seconde extrémité de la nappe de rigidification méridienne étant située entre la première extrémité et le plan équatorial du pneumatique ;
- la rigidité moyenne de compression de la nappe de rigidification méridienne dans le sens des fils ou câbles de ladite nappe, est supérieure à 1 Gpa, cette rigidité étant obtenue en multipliant la rigidité de compression d'un seul fil ou câble par le nombre de fils ou câbles par unité de longueur de nappe.

La combinaison des paramètres énoncés ci dessus permet de bénéficier des avantages d'une architecture de pneumatique dissymétrique, tout en ne nécessitant pas la présence de moyens supplémentaires pour contrebalancer les effets de la dérive induite en roulage en ligne droite. L'intérêt d'un pneumatique selon l'invention est significatif puisque les phénomènes d'usure irrégulière en roulage ligne droite (au sens d'usures localisées sur certaines zones de la bande de roulement) sont sensiblement atténués.

Lorsque Lr est inférieur à 15 % de Ls, l'effet de rigidification de la nappe de rigidification méridienne supplémentaire est insuffisant pour en mesurer les effets sur le pneumatique; lorsque Lr est supérieur à 45 % de Ls, il se produit, lorsque le pneumatique est soumis à une vitesse de rotation élevée, des effets induits qui peuvent pénaliser les performances de roulage, dudit pneumatique.

De même pour éviter un blocage en direction radiale de la partie médiane du sommet du pneumatique mis en rotation autour de son axe, il est préférable de prévoir que la deuxième extrémité de la nappe de rigidification méridienne est située par rapport au plan équatorial à une distance D2 supérieure au tiers de Lr.

Lorsqu'un pneumatique selon l'invention est mis en rotation à une vitesse de rotation élevée, la présence d'une nappe de rigidification méridienne a un effet par sa seule masse supplémentaire comparé au même pneumatique sans cette nappe. Pour réduire le plus possible cet effet, il est préférable de prévoir que l'extrémité de la nappe de rigidification méridienne la plus éloignée du plan équatorial est située à une distance D1 dudit plan comprise entre 35% et 45% de la largeur totale Ls de l'armature de sommet.

Pour réaliser un allègement substantiel de l'armature de sommet et donc du pneumatique, il est avantageux de prévoir que l'armature sommet est constituée par au moins deux nappes de sommet, chaque nappe de sommet étant composée d'une matrice caoutchoutique renforcée par une pluralité de fils ou câbles textiles disposés parallétement selon sensiblement une même direction, la nappe de rigidification sommet étant renforcée par des fils ou câbles métalliques. Cette disposition permet de conférer à l'armature sommet un niveau de rigidité en flexion sur chant satisfaisant; elle permet également d'abaisser sensiblement la résistance au roulement d'un pneumatique comprenant cette armature de sommet. Les mêmes effets positifs sont atteints si l'on emploie en combinaison des mélanges de caoutchouc de faible module d'élasticité, lesdits mélanges enrobant les câbles textiles des nappes de travail.

Préférentiellement, le mélange de gomme des nappes de l'armature de sommet et de la nappe de rigidification méridienne a un module d'extension, à 10 % de déformation et à température ambiante, inférieur à 12 MPa et a une perte à 60° C inférieure à 25 %.

Avantageusement, la largeur Lr de la nappe supplémentaire de rigidification d'orientation essentiellement méridienne est comprise entre 20 et 35% de la largeur efficace de l'armature de sommet comprenant l'ensemble des nappes dites de travail.

Un effet optimum est atteint dès lors que l'angle moyen que font les renforts (sous forme de fils ou câbles) de la nappe supplémentaire de rigidification méridienne est compris entre 70° et 90°; cet angle étant mesuré par rapport au plan équatorial perpendiculaire à l'axe de rotation du pneumatique et passant par le milieu de la largeur de l'armature de sommet.

En outre, il peut être disposé, radialement entre la nappe de rigidification sommet et l'armature de carcasse, un profilé de caoutchouc ayant une épaisseur comprise entre 0.3 et 1 mm (épaisseur mesurée radialement au dessus de l'extrémité axialement la plus extérieure de la nappe de rigidification) et un module d'extension à 10 % de déformation, mesuré dans des conditions de tests usuelles et à température ambiante, au moins égal à 5 MPa et au plus égal à 15 MPa, ce profilé s'étendant de façon continue dans la direction circonférentielle et ayant, vu dans un plan de coupe radial (c'est-à-dire contenant l'axe de rotation du pneumatique), son extrémité axialement la plus à l'intérieur située à une distance du plan équatorial inférieure à la distance de l'extrémité axialement la plus à l'extérieur de la nappe de rigidification mesurée par rapport au même plan équatorial.

Il est de plus intéressant d'associer au pneumatique selon l'invention la présence d'une sculpture de bande de roulement, la moitié de cette bande située radialement à l'extérieur de la nappe supplémentaire de rigidification méridienne étant pourvue d'une sculpture propre formée d'éléments de relief, cette sculpture ayant une rigidité de sculpture inférieure à la rigidité de sculpture de l'autre moitié de bande de roulement; dans ce cas, les épaisseurs de la bande de roulement sont sensiblement constante sur toute la largeur de ladite bande. Par rigidité de sculpture, on entend essentiellement la rigidité de la bande de roulement lorsque le pneumatique selon l'invention, dans des conditions normales d'usage (pression de gonflage et charge supportée), est sollicité en dérive.

Par ailleurs, il est proposé une méthode de montage d'un ensemble de quatre pneumatiques de structure dissymétrique permettant une amélioration des performances de roulage en virage tout en permettant une réduction de l'usure des pneumatiques et du tirage latéral sur véhicule, chaque pneumatique ayant deux bourrelets, un sommet et deux flancs assurant la liaison entre les bourrelets et le sommet, chaque pneumatique ayant une armature de carcasse s'étendant d'un bourrelet à l'autre et, radialement à l'extérieur, une armature de sommet, de largeur égale à Ls, formée par un empilement d'au moins deux nappes de sommet, chacune de ces nappes de sommet de largeur supérieure ou égale à Ls étant composée d'une pluralité de fils ou câbles disposés parallèlement selon sensiblement une même direction, les câbles étant croisés d'une nappe à sa suivante.

Chaque pneumatique comporte en outre une nappe de rigidification méridienne disposée radialement entre l'armature de carcasse et l'armature de sommet et formée par une pluralité de fils ou câbles sensiblement parallèles les uns aux autres et formant un angle moyen avec la direction circonférentielle compris entre 50° et 90°, cette nappe de largeur Lr étant toute entière située d'un même côté par rapport au plan équatorial du pneumatique.

La méthode selon l'invention consiste à monter quatre pneumatiques tels que décrits de manière à ce que la nappe de rigidification méridienne de chaque pneumatique monté sur le véhicule soit située du côté intérieur véhicule, c'est-à-dire entre l'intérieur du véhicule et le plan équatorial du pneumatique.

Par définition, le plan équatorial est le plan perpendiculaire à l'axe de rotation du pneumatique passant par le milieu de l'armature de sommet.

Préférentiellement, la largeur Lr, mesurée entre une première extrémité et une seconde extrémité est comprise entre 15 et 45 % de Ls, la première extrémité de cette nappe de rigidification méridienne étant située à une distance D1 du plan équatorial du pneumatique comprise entre 35 % et 50 % de Ls, la seconde extrémité de la nappe de rigidification méridienne étant située entre la première extrémité et le plan équatorial du pneumatique.

Préférentiellement, pour chaque pneumatique la rigidité moyenne de compression de la nappe de rigidification méridienne dans le sens des fils ou câbles de ladite nappe, est supérieure à 1 Gpa, cette rigidité étant obtenue en multipliant la rigidité de compression d'un seul fil ou câble par le nombre de fils ou câbles par unité de longueur de nappe.

La méthode proposée, selon laquelle on positionne vers l'intérieur du véhicule les nappes de rigidification méridienne des quatre pneumatiques d'un véhicule, s'applique également au montage des pneumatiques de l'essieu avant dudit véhicule mais ne permet toutefois pas d'atteindre le même niveau de résultat de performance pour le véhicule.

Un exemple non limitatif de réalisation pratique est présenté ci-après avec les dessins ci-joints suivant lesquels :
- la figure 1 montre une coupe méridienne d'un pneumatique selon l'invention comportant une nappe supplémentaire de rigidification méridienne;
- la figure 2 montre en vue éclatée l'orientation des câbles des différentes nappes;
- la figure 3 montre les rigidités de dérive calculées pour le pneumatique présenté avec la figure 1 comparées aux rigidités de dérive calculées pour le même pneumatique sans nappe de rigidification méridienne.

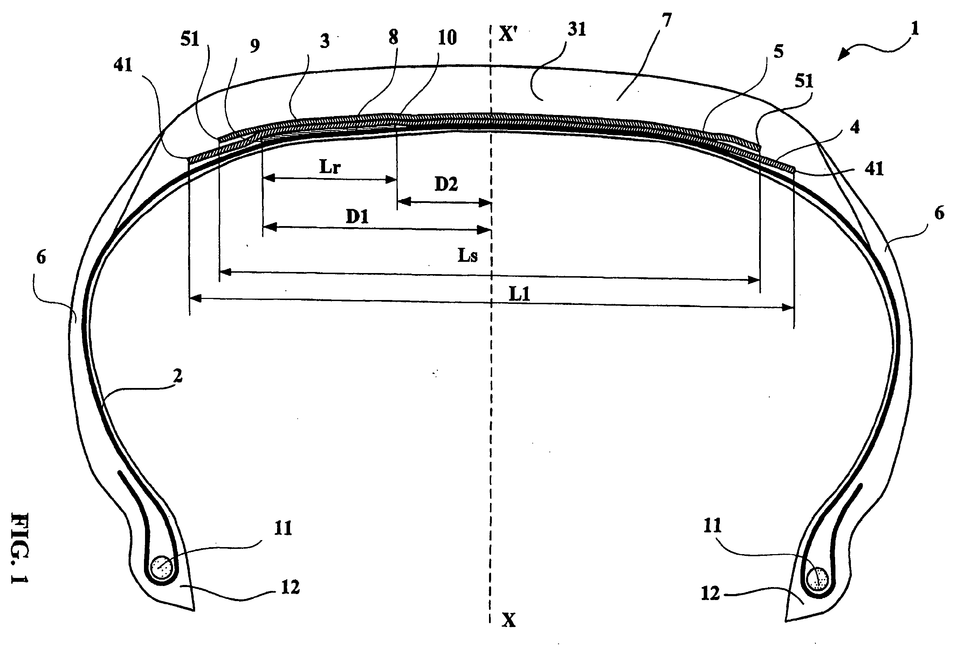

Sur la figure 1, montrant une coupe méridienne d'un pneumatique de tourisme 1 de dimension 195/65 R 15, on distingue deux bourrelets 12 prolongés par des flancs 6 eux mêmes reliés aux deux extrémités latérales d'une bande de roulement 7. Ce pneumatique 1 comporte une armature de carcasse 2 s'étendant d'un bourrelet à l'autre et ancrée dans chacun desdits bourrelets 12 par retournement autour d'un élément annulaire inextensible 11. Cette armature de carcasse 2, formée dans le cas présent d'une nappe de câbles 144/2 PET orientés radialement (c'est-à-dire faisant avec le plan équatorial un angle égal à ou voisin de 90°), est surmontée dans sa région médiane et radialement vers l'extérieur par une armature de sommet 3 surmontée d'une bande de roulement 31 destinée au contact avec la chaussée au cours du roulage.

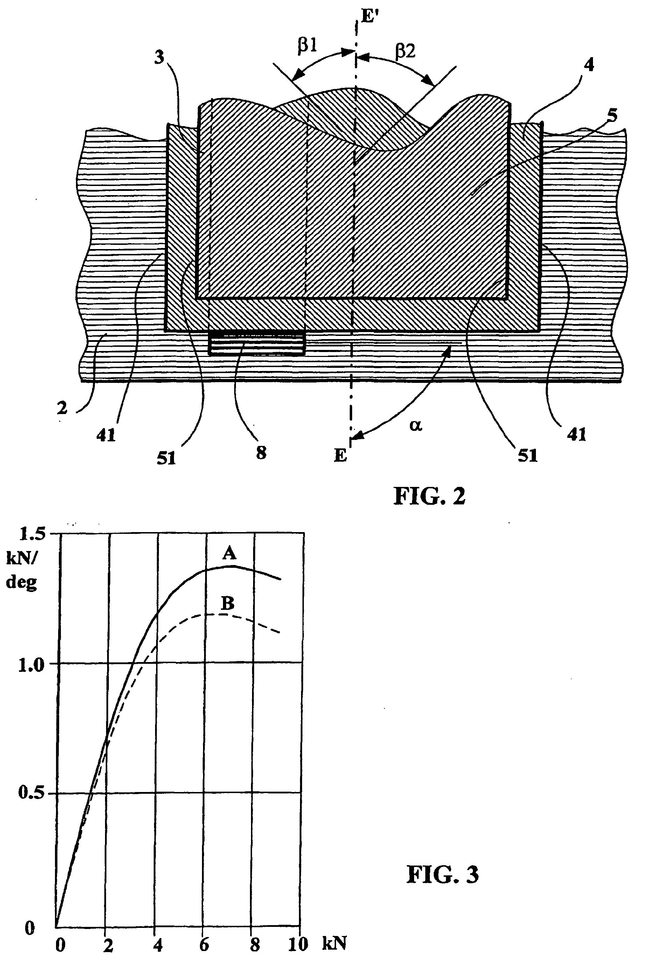

L'armature de sommet 3 de ce pneumatique est composé d'un empilement d'une première et d'une seconde nappes de travail 4, 5 formées chacune d'une pluralité de câbles parallèles, lesdits câbles étant des câbles métalliques de formule 3-26 (trois fils de 26/100) ; l'angle des câbles de la première nappe 4 faisant avec la direction circonférentielle un angle β**1** sensiblement égal à 25° et ceux de la seconde nappe 5 faisant un angle β**2** sensiblement égal à 25° (ces angles sont visibles clairement sur la figure 2). Dans le cas présenté, la première nappe de travail 4 est située radialement entre la nappe de carcasse 2 et la seconde nappe de travail 5 et a une largeur LI (mesurée entre les extrémités 51 de cette nappe) supérieure à la largeur de la seconde nappe. On définit la largeur efficace Ls de l'armature de sommet 3 dans cet exemple comme la largeur de la seconde nappe de travail (mesurée entre les extrémités 41 de cette nappe).

En outre, il est disposé radialement entre la nappe de carcasse 2 et l'armature de sommet 3 une nappe de rigidification méridienne 8 formée d'une pluralité de câbles métalliques de formule 3-26 identiques à ceux employés dans les nappes de travail (cette nappe est visible sur la partie gauche de la coupe du pneumatique montrée sur la figure 1, correspondant au côté du pneumatique prévu pour être placé du côté du véhicule). Cette nappe de rigidification méridienne 8 comporte, vue en coupe sur la figure 1, deux extrémités, une première extrémité 9 proche d'un bord de l'armature de sommet 3 et une seconde extrémité 10 située entre cette première extrémité 9 et le plan équatorial dont la trace est repérée par XX', et présente les caractéristiques suivantes :
- largeur L1 : 160 mm; largeur efficace du sommet Ls : 146 mm ;
- largeur Lr = 40 mm (soit 27 % de Ls) ;
- distance D1, séparant la première extrémité de la nappe de rigidification méridienne 8 du plan équatorial, égale à 60 mm (soit 41% de Ls) ;
- distance D2, séparant la deuxième extrémité de la nappe de rigidification méridienne 8 du plan équatorial, égale à 20 mm
- angle des renforts de la nappe de rigidification méridienne 8 : 90° ;
- rigidité moyenne de compression dans le sens méridien de la nappe de rigidifcation méridienne 8 égale à 7 Gpa. Cette rigidité est obtenue en multipliant la rigidité de compression d'un câble par le nombre de câbles par unité de surface de ladite nappe. Le pas des câbles de la nappe de rigidification est égal à 2.0 mm.

Ce pneumatique ainsi décrit est destiné à être monté sur un véhicule de telle sorte que le flanc situé axialement du côté de la nappe de rigidification méridienne est placé vers l'intérieur du véhicule, l'autre flanc étant en conséquence orienté vers l'extérieur dudit véhicule.

Parmi des variantes non représentées, la première nappe peut être moins large que la seconde nappe de travail et dans ce cas encore la largeur efficace Ls de l'armature de sommet est prise comme la plus petite des largeurs desdites nappes de travail. Une autre variante de structure de l'armature de sommet comprend une nappe de travail dont au moins une extrémité est repliée sur elle même la nappe de rigidification méridienne pouvant être préférentiellement placée du côté où il n'y a pas de repliement.

La figure 2 montre schématiquement l'armature de carcasse 2, les nappes de travail 4, 5 composant l'armature de sommet 3 et la nappe de rigidification méridienne 8 pour le pneumatique décrit avec le support de la figure 1. Les références employées sur les deux figures 1 et 2 ont les mêmes significations. Sur cette figure 2, les câbles composant la première nappe de travail 4 font un angle β**1** égal à 25° par rapport au plan équatorial dont la trace dans le plan de la figure est indiquée par la ligne EE'; les câbles de la seconde nappe de travail 5 font un angle β**2** égal à 25° par rapport au plan équatorial. Les câbles en acier de la nappe de rigidification 8 font un angle α de 90°.

Dans le cas où les câbles de la nappe de rigidifcation méridienne font un angle α différent de 90° avec le plan équatorial, il est alors préférable que lesdits câbles présente une orientation de même signe que l'angle des renforts de la nappe de l'armature de sommet radialement au dessus de ladite nappe de rigidification (cela revient à dire que les renforts desdites nappes présentent un même sens d'inclinaison par rapport au plan équatorial).

La figure 3 compare les rigidités de dérive pour un degré de dérive du pneumatique selon l'invention de dimension 195/65 R 15 et d'un pneumatique de même dimension ne comportant pas de nappe de rigidification méridienne en fonction de la charge supportée. Sur l'axe des abscisses sont portées les charges supportées par les deux pneumatiques montés sur jante de dimension 6 J 15 (selon les normes ETRTO) et gonflés à 2.4 bars, les pneumatiques selon l'invention étant montés sur un véhicule de manière à ce que la nappe de rigidification méridienne soit située vers l'intérieur dudit véhicule. Sur l'axe des ordonnées est portée la rigidité de dérive calculée comme étant la valeur de la poussée transversale exercée par la chaussée sur le pneumatique pour un degré de dérive. La courbe (A) en traits pleins correspond au pneumatique selon l'invention, la courbe (B) en traits pointillés correspond au pneumatique sans nappe de rigidification méridienne. On observe clairement une augmentation sensible de la rigidité de dérive pour un degré de dérive avec le pneumatique selon l'invention, cette augmentation étant d'autant plus importante que la charge supportée est grande.

Une variante de réalisation, non représentée ici, consiste à appliquer le principe de l'invention au cas d'une armature de sommet du pneumatique comprenant une première nappe de travail située radialement entre la carcasse et une seconde nappe de travail, ladite première nappe étant repliée sur elle même à au moins une de ses deux extrémités axiales pour venir partiellement envelopper l'une au moins des extrémités de la seconde nappe de travail. Dans le cas où l'une des nappes de travail est repliée à une seule de ses extrémités, il est préférable de placer la nappe de rigidification supplémentaire méridienne du côté du sommet du pneumatique axialement opposé à celui comprenant le repliement.

Dans toutes les réalisations présentées, et pour limiter les déformations du sommet du pneumatique à grande vitesse, il est judicieux de prévoir la présence d'au moins une nappe de frettage du sommet composée de renforts orientés de manière sensiblement parallèles les uns aux autres selon une direction sensiblement circonférentielle; préférentiellement, le nombre moyen de renforts par unité de longueur dans la région du sommet comprenant la nappe de rigidification sommet est inférieur au nombre moyen de renforts par unité de longueur dans le reste du sommet.

Dans une autre variante de l'invention, la nappe de rigidification méridienne peut être intercalée entre deux des nappes de travail. Bien entendu, ce qui a été décrit ici ne doit pas être considéré comme limitatif et en particulier, l'armature de sommet peut être composée d'un nombre de nappe supérieur à deux.

## Revendications

1. Pneumatique (1) présentant un sens préférentiel de montage sur un véhicule routier et comprenant deux bourrelets (12), un sommet et deux flancs (6) assurant la liaison entre les bourrelets et le sommet, ce pneumatique (1) ayant une armature de carcasse (2) s'étendant d'un bourrelet à l'autre et, radialement à l'extérieur, une armature de sommet (3), de largeur égale à Ls, formée par un empilement d'au moins deux nappes de sommet (4, 5), chacune de ces nappes de sommet étant de largeur au moins égale à Ls et étant composée d'une pluralité de fils ou câbles disposés parallèlement selon sensiblement une même direction et continus sur toute la largeur des nappes de sommet, les câbles étant croisés d'une nappe à la suivante, ce pneumatique (1) comportant en outre une nappe de rigidification méridienne (8) disposée radialement entre l'armature de carcasse (2) et l'armature de sommet (3) et formée par une pluralité de fils ou câbles sensiblement parallèles les uns aux autres, et faisant avec la direction circonférentielle un angle moyen compris entre 50° et 90°, cette nappe (8), de largeur Lr ayant une première extrémité (9) et une seconde extrémité (10), **caractérisé en ce que** lesdites deux extrémités sont situées d'un même côté par rapport au plan équatorial du pneumatique et **en ce que** ledit pneumatique comprend des moyens de repérage pour indiquer le côté du pneumatique sur lequel est située la nappe de rigidification méridienne, ces moyens de repérage servant à positionner ladite nappe à l'intérieur par rapport au véhicule routier lors du montage dudit pneumatique sur ledit véhicule.

2. Pneumatique (1) selon la revendication 1 **caractérisé en ce que** la largeur Lr de la nappe de rigidification méridienne (8) est comprise entre 15 et 45 % de Ls.

3. Pneumatique (1) selon la revendication 1 ou la revendication 2 **caractérisé en ce que** la première extrémité (9) de la nappe de rigidification méridienne (8) est située à une distance D1 du plan équatorial du pneumatique comprise entre 35 % et 50 % de Ls, la seconde extrémité (10) étant située entre la première extrémité et le plan équatorial du pneumatique.

4. Pneumatique (1) selon l'une des revendications 1 à 3 **caractérisé en ce que** la rigidité moyenne de compression de la nappe de rigidification méridienne (8) dans le sens des fils ou câbles de ladite nappe, est supérieure à 1 Gpa, cette rigidité étant obtenue en multipliant la rigidité de compression d'un seul fil ou câble par le nombre de fils ou câbles par unité de longueur de nappe.

5. Pneumatique (1) selon l'une des revendications 1 à 4 **caractérisé en ce que** l'armature sommet (3) est constituée par au moins deux nappes de sommet (4, 5), chaque nappe de sommet étant composée d'une matrice caoutchoutique renforcée par une pluralité de fils ou câbles textiles disposés parallèlement selon sensiblement une même direction, la nappe de rigidification sommet (8) étant renforcée par des fils ou câbles métalliques.

6. Pneumatique (1) selon l'une des revendications 1 à 5 **caractérisé en ce que** la deuxième extrémité de la nappe de rigidification méridienne (8) est située par rapport au plan équatorial à une distance D2 supérieure au tiers de Lr.

7. Pneumatique (1) selon l'une des revendications 1 à 6 **caractérisé en ce que** l'angle α des fils ou câbles de la nappe de rigidification (8) a le même signe que l'angle β1 des renforts de la nappe (4) de l'armature de sommet (3) en contact avec ladite nappe de rigidification.

8. Pneumatique (1) selon l'une des revendications 1 à 7 **caractérisé en ce que** la largeur Lr de la nappe de rigidification méridienne (8) est comprise entre 20 et 35 % de Ls.

9. Pneumatique (1) selon l'une des revendications 1 à 8**caractérisé en ce que** l'angle moyen α des fils ou câbles de la nappe de rigidification méridienne (8) avec la direction circonférentielle est compris entre 70° et 90°.

10. Pneumatique (1) selon l'une des revendications 1 à 9 **caractérisé en ce que** le sommet dudit pneumatique comporte radialement à l'extérieur une bande de roulement (31) en mélange de caoutchouc destinée à être en contact avec la chaussée pendant le roulage, cette bande de roulement pouvant être divisée dans le sens axial en deux parties, chaque partie de bande étant pourvue d'une sculpture propre formée d'éléments de relief, la sculpture de la partie de bande située radialement à l'extérieur de la région du sommet comprenant la nappe de rigidification méridienne (8) ayant une rigidité de sculpture inférieure à celle de l'autre partie de bande de roulement.

11. Pneumatique (1) selon l'une des revendications 1 à 10 comportant, en outre, au moins une nappe de frettage du sommet composée de renforts orientés de manière sensiblement parallèles les uns aux autres selon une direction sensiblement circonférentielle, le nombre moyen de renforts par unité de longueur dans la région du sommet comprenant la nappe de rigidification méridienne (8) étant inférieur au nombre moyen de renforts par unité de longueur dans le reste du sommet.

12. Méthode de montage sur un véhicule d'un ensemble de pneumatiques (1) de structure dissymétrique, chaque pneumatique (1) ayant deux bourrelets (12), un sommet et deux flancs (6) assurant la liaison entre les bourrelets et le sommet, chaque pneumatique (1) ayant une armature de carcasse (2) s'étendant d'un bourrelet à l'autre et, radialement à l'extérieur, une armature de sommet (3), de largeur égale à Ls, formée par un empilement d'au moins deux nappes de sommet (4, 5), chacune de ces nappes de sommet de largeur supérieure ou égale à Ls étant composée d'une pluralité de fils ou câbles disposés parallèlement selon sensiblement une même direction et continus sur toute la largeur desdites nappes (4, 5), les câbles étant croisés d'une nappe à sa suivante, chaque pneumatique comportant en outre une nappe de rigidification méridienne (8) disposée radialement entre l'armature de carcasse (2) et l'armature de sommet (3) et formée par une pluralité de fils ou câbles sensiblement parallèles les uns aux autres et formant un angle moyen avec la direction circonférentielle compris entre 50° et 90°, cette nappe de rigidification méridienne (8) ayant une largeur Lr, mesurée entre une première extrémité et une seconde extrémité de ladite nappe, qui est comprise entre 15 et 45 % de Ls, lesdites deux extrémités étant situées d'un même côté par rapport au plan équatorial du pneumatique, la méthode selon l'invention consistant à monter quatre pneumatiques tels que décrits de manière à ce que la nappe de rigidification méridienne (8) de chaque pneumatique soit située du côté intérieur véhicule, c'est-à-dire entre l'intérieur du véhicule et le plan équatorial du pneumatique.

13. Méthode de montage d'un ensemble de pneumatiques selon la revendication 13 **caractérisée en ce que** pour chaque pneumatique (1), la première extrémité de la nappe de rigidification méridienne (8) est située à une distance D1 du plan équatorial du pneumatique comprise entre 35 % et 50 % de Ls, la seconde extrémité de la nappe de rigidification méridienne (8) étant située entre la première extrémité et le plan équatorial dudit pneumatique.

## Patentansprüche

1. Luftreifen (1), der an einem Automobil eine bevorzugte Montagerichtung aufweist und zwei Wülste (12), einen Scheitel und zwei Flanken (6) besitzt, die die Verbindung zwischen den Wülsten und dem Scheitel sicherstellen, wobei der Luftreifen eine Karkassenbewehrung (2) aufweist, die sich von einem Wulst zum anderen erstreckt, und radial außen eine Scheitelbewehrung (3) der Breite Ls besitzt, die aus einem Stapel von mindestens zwei Scheitellagen (4, 5) gebildet wird, wobei jede Scheitellage mindestens die Breite Ls aufweist und aus einer Mehrzahl von Drähten oder Seilen gebildet wird, die in einer Richtung in etwa parallel angeordnet und über die gesamte Breite der Scheitellage kontinuierlich sind, wobei die Seile von einer Lage zur nächsten gekreuzt sind, wobei der Luftreifen (1) ferner eine Meridianlage zur Versteifung (8) aufweist, die radial zwischen der Karkassenbewehrung (2) und der Scheitelbewehrung (3) angeordnet ist und aus einer Mehrzahl von in etwa parallel zueinander verlaufenden Drähten oder Kabeln gebildet wird, die mit der Umfangsrichtung einen mittleren Winkel von etwa 50 bis 90 ° bilden, wobei die Lage (8) der Breite Lr ein erstes Ende (9) und ein zweites Ende (10) aufweist, **dadurch gekennzeichnet, dass** die beiden Enden in Bezug auf die Äquatorialebene des Luftreifens auf der gleichen Seite liegen, und **dadurch**, dass der Luftreifen Einrichtungen zur Kennzeichnung umfasst, um die Seite des Luftreifens anzuzeigen, auf der sich die Meridianlage zur Versteifung befindet, wobei diese Mittel zur Kennzeichnung dazu dienen, diese Lage bei der Montage des Luftreifens auf dem Fahrzeug in Bezug auf das Fahrzeug innen anzubringen.

2. Luftreifen (1) nach Anspruch 1, **dadurch gekennzeichnet, dass** die Breite Lr der Meridianlage zur Versteifung (8) im Bereich von 15 bis 45 % Ls liegt.

3. Luftreifen (1) nach Anspruch 1 oder Anspruch 2, **dadurch gekennzeichnet, dass** das erste Ende (9) der Meridianlage zur Versteifung (8) in einem Abstand D 1 von der Äquatorialebene des Luftreifens von 35 bis 50 % Ls liegt, wobei sich das zweite Ende (10) zwischen dem ersten Ende und der Äquatorialebene befindet.

4. Luftreifen (1) nach einem der Ansprüche 1 bis 3, **dadurch gekennzeichnet, dass** die mittlere Kompressionsfestigkeit der Meridianlage zur Versteifung in Richtung der Drähte oder Seile der Lage über 1 Gpa liegt, wobei diese Steifigkeit erhalten wird, indem die Kompressionsfestigkeit eines Seils oder Drahtes mit der Anzahl der Drähte oder Seile pro Breiteneinheit der Lage multipliziert wird.

5. Luftreifen (1) nach einem der Ansprüche 1 bis 4, **dadurch gekennzeichnet, dass** die Scheitelbewehrung (3) aus mindestens zwei Scheitellagen (4, 5) besteht, wobei jede Scheitellage aus einer Kautschukmatrix zusammengesetzt ist, die mit einer Mehrzahl von textilen Drähten oder Seilen verstärkt ist, die in einer Richtung in etwa parallel angeordnet sind, wobei die Versteifungslage des Scheitels (8) mit Metalldrähten oder Metallseilen verstärkt ist.

6. Luftreifen (1) nach einem der Ansprüche 1 bis 5, **dadurch gekennzeichnet, dass** sich das zweite Ende der Meridianlage zur Versteifung (8) in Bezug auf die Äquatorialebene in einem Abstand D2 größer ein Drittel Lr befindet.

7. Luftreifen (1) nach einem der Ansprüche 1 bis 6, **dadurch gekennzeichnet, dass** der Winkel α der Drähte oder Seile der Versteifungslage (8) das gleiche Vorzeichen wie der Winkel β 1 der Verstärkungen der Lage (4) der Scheitelbewehrung (3) in Kontakt mit der Versteifungslage aufweist.

8. Luftreifen (1) nach einem der Ansprüche 1 bis 7, **dadurch gekennzeichnet, dass** die Breite Lr der Meridianlage zur Versteifung (8) im Bereich von 20 bis 35 % Ls liegt.

9. Luftreifen (1) nach einem der Ansprüche 1 bis 8, **dadurch gekennzeichnet, dass** der mittlere Winkel α der Drähte oder Seile der Meridianlage zur Versteifung (8) mit der Umfangsrichtung im Bereich von 70 bis 90 ° liegt.

10. Luftreifen (1) nach einem der Ansprüche 1 bis 9, **dadurch gekennzeichnet, dass** der Scheitel des Luftreifens radial außen einen Laufstreifen (31) aus einer Kautschukmischung aufweist, der während der Fahrt mit der Fahrbahn in Kontakt kommen soll, wobei der Laufstreifen in axialer Richtung aus zwei Teilen bestehen kann, wobei jeder Teil des Laufstreifens mit einem eigenen Profil versehen ist, das aus Reliefelementen gebildet wird, wobei das Profil des Teils des Laufstreifens radial außen im Bereich des Scheitels, der die Meridianlage zur Versteifung (8) umfasst, eine Profilsteifigkeit aufweist, die kleiner ist als die Profilsteifigkeit des anderen Teils des Laufstreifens.

11. Luftreifen (1) nach einem der Ansprüche 1 bis 10, der ferner mindestens eine Bewehrungslage des Scheitels aufweist, die aus Verstärkungen zusammengesetzt ist, die in etwa in Umfangsrichtung in etwa parallel zueinander verlaufen, wobei die mittlere Zahl der Verstärkungen pro Breiteneinheit in dem Bereich des Scheitels, der die Meridianlage zur Versteifung (8) umfasst, kleiner ist als die mittlere Anzahl der Verstärkungen pro Breiteneinheit in dem restlichen Scheitel.

12. Verfahren zur Montage eines Satzes von Luftreifen (1) mit asymmetrischer Struktur auf ein Kraftfahrzeug, wobei jeder Luftreifen (1) zwei Wülste (12), einen Scheitel und zwei Flanken (6) aufweist, die die Verbindung zwischen den Wülsten und dem Scheitel sicherstellen, wobei jeder Luftreifen eine Karkassenbewehrung (2) besitzt, die sich von einem Wulst zum anderen erstreckt, und radial außen eine Scheitelbewehrung (3) der Breite Ls aufweist, die durch einen Stapel von mindestens zwei Scheitellagen (4, 5) gebildet wird, wobei jede Scheitellage mit einer Breite von mindestens Ls aus einer Mehrzahl von Drähten oder Seilen zusammengesetzt ist, die in einer Richtung in etwa parallel und über die gesamte Breite der Lagen (4, 5) kontinuierlich angeordnet sind, wobei die Seile von einer Lage zur nächsten gekreuzt sind, wobei jeder Luftreifen ferner eine Meridianlage zur Versteifung (8) aufweist, die radial zwischen der Karkassenbewehrung (2) und der Scheitelbewehrung (3) angeordnet ist und durch eine Mehrzahl von in etwa parallel zueinander verlaufenden Drähten oder Seilen gebildet wird, die mit der Umfangsrichtung einen mittleren Winkel von 50 bis 90 ° bilden, wobei die Meridianlage zur Versteifung (8) eine Breite Lr aufweist, die zwischen einem ersten Ende und einem zweiten Ende der Lage gemessen wird, die im Bereich von 15 bis 45 % Ls liegt, wobei sich die beiden Enden in Bezug auf die Äquatorialebene des Luftreifens auf der gleichen Seite befinden, wobei das erfindungsgemäße Verfahren darin besteht, die vier beschriebenen Reifen so aufzuziehen, dass die Meridianlage zur Versteifung (8) jedes Luftreifens auf der Innenseite des Kraftfahrzeugs liegt, d. h. zwischen dem Fahrzeuginnern und der Äquatorialebene des Luftreifens.

13. Verfahren zur Montage eines Satzes von Luftreifen nach Anspruch 13, **dadurch gekennzeichnet, dass** sich bei jedem Luftreifen (1) das erste Ende der Meridianlage zur Versteifung (8) in einem Abstand D 1 von der Äquatorialebene des Luftreifens von 35 bis 50 % Ls befindet, wobei das zweite Ende der Meridianlage zur Versteifung (8) zwischen dem ersten Ende und der Äquatorialebene des Luftreifens liegt.

## Claims

1. Tyre (1) having a preferential fitting direction to a road vehicle and comprising two beads (12), a crown and two side-walls (6) that connects the beads and the crown, the said tyre (1) having a carcass reinforcement (2) extending from one bead to the other and, radially outside this, a crown reinforcement (3), of width equal to Ls, formed by a stack of at least two crown plies (4, 5), each of these crown plies being of width at least equal to Ls and being composed of a plurality of cords or cables arranged parallel to one another along essentially the same direction, the cables being crossed over from one ply to the next, the said tyre (1) also comprising a meridian rigidising ply (8) positioned radially between the carcass reinforcement (2) and the crown reinforcement (3) and formed by a plurality of cords or cables essentially parallel to one another and making relative to the circumferential direction an average angle between 50° and 90°, this ply (8), of width Lr, having a first edge (9) and a second edge (10), the said two edges being located on the same side relative to the equatorial plane of the tyre, the said tyre being **characterised in that** it comprises marking means to indicate the side of the tyre on which the meridian rigidising ply is positioned, the said marking means serving to position the said ply on the inside relative to the road vehicle when the said tyre is fitted to the said vehicle.

2. Tyre (1) according to Claim 1, **characterised in that** the width Lr of the meridian rigidising ply (8) is between 15% and 45% of Ls.

3. ' Tyre (1) according to Claim1 or Claim 2, **characterised in that** the first edge (9) of the meridian rigidising ply (8) is located a distance D1 from the equatorial plane of the tyre between 35% and 50% of Ls, while the second edge (10) is located between the first edge and the equatorial plane of the tyre.

4. Tyre (1) according to any of Claims 1 to 3, **characterised in that** the mean compression rigidity of the meridian rigidising play (8) in the direction of the cords or cables of the said ply, is greater than 1 Gpa, this rigidity being obtained by multiplying the compression rigidity of a single cord or cable by the number of cords or cables per unit length of the ply.

5. Tyre (1) according to any of Claims 1 to 4, **characterised in that** the crown reinforcement (3) consists of at least two crown plies (4, 5), each crown ply consisting of a rubber matrix reinforced by a plurality of textile cords or cables arranged parallel to one another along essentially the same direction, the crown rigidising ply (8) being reinforced by metallic wires or cables.

6. Tyre (1) according to any of Claims 1 to 5, **characterised in that** the second edge of the meridian rigidising ply (8) is located relative to the equatorial plane at a distance D2 greater than one-third of Lr.

7. Tyre (1) according to any of Claims 1 to 6, **characterised in that** the angle α of the wires or cables of the rigidising ply (8) has the same sign as the angle β1 of the reinforcing elements of the ply (4) of the crown reinforcement (3) in contact with the said rigidising ply.

8. Tyre (1) according to any of Claims 1 to 7, **characterised in that** the width Lr of the meridian rigidising ply (8) is between 20% and 35% of Ls.

9. Tyre (1) according to any of Claims 1 to 8, **characterised in that** the average angle α of the wires or cables of the meridian rigidising ply (8) relative to the circumferential direction is between 70° and 90°.

10. Tyre (1) according to any of Claims 1 to 9, **characterised in that** the crown of the said tyre comprises radially on the outside a tread (31) made from a rubber mix designed to be in contact with the road during rolling, the said tread being able to be divided in the axial direction in two parts, each part of the tread being provided with a pattern of its own formed of relief elements, the tread pattern of that part of the tread located radially outside the crown area comprising the said meridian rigidising ply (8) having a tread rigidity lower than that of the other part of the tread.

11. Tyre (1) according to any of Claims 1 to 10 comprising, in addition, at least one crown hooping ply consisting of reinforcement elements orientated essentially parallel to one another along an essentially circumferentially direction, the average number of reinforcing elements per unit length in the crown area comprising the meridian rigidising ply (8) being smaller than the average number of reinforcing elements per unit length in the remainder of the crown.

12. Method of fitting to a vehicle a group of tyres (1) having asymmetrical structure, each tyre (1) having two beads (12), a crown and two side-walls (6) connecting the beads and the crown, each tyre (1) having a carcass reinforcement (2) that extends from one bead to the other and, radially outside this, a crown reinforcement (3) of width equal to Ls, formed by a stack of at least two crown plies (4, 5), each of these crown plies having widths greater than or equal to Ls and being composed of a plurality of cords or cables arranged parallel to one another along essentially the same direction and being continuous over the full width of the said plies (4, 5), the cables being crossed over from one ply to the next, each tyre having in addition a meridian rigidising ply (8) arranged radially between the carcass reinforcement (2) and the crown reinforcement (3) and formed by a plurality of wires or cables essentially parallel to one another and forming an average angle relative to the circumferential direction between 50° and 90°, the said meridian rigidising ply (8) having a width Lr, measured between a first edge and a second edge of the said ply, which is between 15% and 45% of Ls, the said two edges being located on the same side of the equatorial plane of the tyre, the method according to the invention consisting in fitting four tyres of the type described in such manner that the meridian rigidising ply (8) of each tyre is located on the inside of the vehicle, i.e. between the inside of the vehicle and the equatorial plane of the tyre.

13. Method of fitting to a vehicle a group of tyres according to Claim 12, **characterised in that** for each tyre (1) the first edge of the meridian rigidising ply (8) is located a distance D1 from the equatorial plane of the tyre which is between 35% and 50% of Ls, and the second edge of the meridian rigidising ply (8) is located between the first edge and the equatorial plane of the said tyre.
